# DEMANDE DE BREVET EUROPEEN

(11) **EP 1 944 930 A2**
(43) Date de publication de la demande: **16.07.2008**
(21) Numéro de dépôt: 08100244.6
(22) Date de dépôt: 09.01.2008
(51) Int. Cl.: H04L 12/58

(54) **Procédé de signalisation permettant la prise en compte de la raison de l'appel**

(30) Priorité: 11.01.2007 FR 0752622
(71) Demandeur: Alcatel Lucent, 75008 Paris (FR)
(72) Inventeur: Davoust, Pascal, 94170, LE PERREUX SUR MARNE (FR); Vergnol, Arnaud, 95250, BEAUCHAMP (FR)
(74) Mandataire: Sciaux, Edmond

(57) **Abrégé**

Procédé de signalisation sur un équipement récepteur (**3, 4**) d'un appel en provenance d'un équipement émetteur (**2, 4**), ce procédé comprenant les opérations suivantes :
- constitution d'une requête de mise en communication par l'équipement émetteur (**2, 4**) à destination de l'équipement récepteur (**3, 4**) ;
- inclusion au sein de la requête d'un message d'objet ayant trait à la raison de l'appel ;
- transmission à l'équipement récepteur (**3, 4**) de la requête de mise en communication, comprenant le message d'objet ;
- réception par l'équipement récepteur (**3, 4**) de la requête de mise en communication ;
- prise en compte du message d'objet par l'équipement récepteur (**3, 4**).

## Description

L'invention a trait au domaine des télécommunications. Elle concerne plus précisément la mise en relation de deux équipements, à savoir un équipement appelant et un équipement appelé.

Une communication téléphonique comprend classiquement une phase, préalable à la communication proprement dite, d'établissement de la communication. Lors de cette phase préalable, également appelée signalisation, l'appel en provenance de l'équipement appelant est présenté à l'équipement appelé, au moyen d'un avertissement qui peut être de type sonore (par exemple par l'intermédiaire d'une sonnerie ou d'une musique), visuel (par exemple par l'affichage d'un témoin lumineux) ou mécanique (par exemple par le biais d'une vibration) ou combiner ces trois types.

Les équipements communicants portatifs modernes : téléphones cellulaires, PDA (Personal Digital Assistant), pagers, etc., comportent des mémoires dans lesquelles sont stockées un certain nombre d'informations, par exemple des informations personnelles relatives au propriétaire (nom, prénom, adresse, fonction, etc.). Ils comprennent également des interfaces leur permettant d'afficher, lors d'une présentation d'appel, des informations relatives au terminal appelant (numéro d'appel, nom et éventuellement photographie du correspondant, etc.). Grâce à ces fonctionnalités, les utilisateurs peuvent, dès la présentation de l'appel, choisir l'action qui leur paraît la plus appropriée : prise ou refus de l'appel, basculement vers un standard téléphonique ou une boîte vocale, mise en attente, etc. On peut également inclure dans les équipements communicants les serveurs de télécommunication, qui disposent de fonctionnalités de gestion des appels, notamment d'émission, de réception, de rejet, de mise en attente et de transfert.

Il est désormais classique que le numéro de l'équipement appelant soit automatiquement affiché sur une interface graphique de l'équipement appelé. La plupart des équipements communicants peuvent même être personnalisés pour générer une sonnerie ou une musique différente selon l'identité supposée de l'appelant.

Pour illustrer ces techniques, on pourra se référer au brevet américain US 6 950 504.

Compte tenu des habitudes prises par les utilisateurs grâce aux des fonctionnalités des équipements communicants portatifs, il existe un besoin de transposer ces fonctionnalités à la téléphonie fixe, et en particulier à la téléphonie d'entreprise. Cette transposition est permise aujourd'hui par les réseaux de téléphonie utilisant le protocole IP (technologie couramment appelée VolP ou Voix sur IP, de l'anglais Voice *over Internet Protocol).* Les réseaux VolP emploient des téléphones adaptés, appelés *téléphones IP,* qui convertissent en signal numérique le signal analogique contenant la parole et constituent à partir de ce signal numérique des paquets IP, placés ensuite dans une trame et transmis sur le réseau (généralement suivant le protocole Ethernet).

Dans les réseaux VolP, la phase de signalisation est couramment réalisée suivant le protocole SIP *(Session Initiation Protocol)* décrit dans la norme RFC3261 de juin 2002.

Une des avancées des réseaux VolP est qu'ils permettent l'intégration de la téléphonie dans l'informatique, avec les avantages qui en découlent (unicité du réseau, possibilités d'appliquer aux fichiers voix les applications logicielles classiques : sauvegarde, compression, cryptage, etc.).

Toutefois, malgré les progrès réalisés les fonctionnalités des réseaux VoIP sont insuffisantes pour permettre une gestion raisonnée des appels. En particulier, on constate dans la pratique que les personnes appelées acceptent fréquemment des communications qu'elles jugent pourtant importunes, soit quant au contenu de la communication, soit quant à sa date ou son horaire.

L'invention vise notamment à faciliter la gestion des appels, en proposant un procédé de signalisation sur un équipement appelé d'un appel en provenance d'un équipement appelant, ce procédé comprenant les opérations suivantes :
- réception d'une requête de mise en communication en provenance de l'équipement appelant à destination de l'équipement appelé ;
- détection au sein de la requête d'un message d'objet ayant trait à la raison de l'appel ;
- transmission au terminal appelé de la requête de mise en communication, comprenant le message d'objet ;
- restitution par le terminal appelé du message d'objet ;
et étant caractérisé en ce qu'il consiste en outre à agréger à ladite requête au moins une proposition de réponse, avant de la transmettre à l'équipement récepteur.

Selon un mode de réalisation préféré, pour agréger à ladite requête au moins une proposition de réponse, avant de la transmettre à l'équipement récepteur, il consiste à déterminer au moins une proposition de réponse dans un serveur intermédiaire, en fonction d'informations dont il dispose en temps réel.

La connaissance préalable de l'objet de l'appel, et une proposition de réponse adaptée au contexte de la communication, facilite à la partie appelée la gestion de ses appels, en lui permettant de choisir en toute connaissance de cause l'action à entreprendre lors de la réception d'une requête de mise en communication : réponse, refus de prendre l'appel, envoi d'une réponse au format textuel, transfert de l'appel, etc.

La restitution du message d'objet par l'équipement appelé peut être effectuée par affichage sur une interface graphique, ou par lecture sur une interface sonore, auquel cas, préalablement à la transmission de la requête de mise en communication à l'équipement appelé, le message d'objet au format texte est converti en un message vocal restituable sur cette interface sonore.

Les opérations supplémentaires suivantes peuvent être prévues ;
- édition par le terminal appelé d'un message de réponse (choisi par exemple parmi un ensemble de messages préétablis mis en mémoire) au message d'objet ;
- transmission au terminal appelant du message de réponse.

Suivant un mode de réalisation, la requête en provenance du terminal appelant est une requête SIP.

D'autres objets et avantages de l'invention apparaîtront à la lumière de la description faite ci-après en référence aux dessins annexés dans lesquels :
- la figure 1 est un schéma illustrant des opérations de communication entre deux terminaux au sein d'un réseau de télécommunications ;
- la figure 2 est un schéma similaire à la figure 1, illustrant une variante de réalisation ;
- la figure 3 est une vue schématique d'une interface graphique d'un terminal appelant ; et
- la figure 4 est une vue schématique d'une interface graphique d'un terminal appelé.

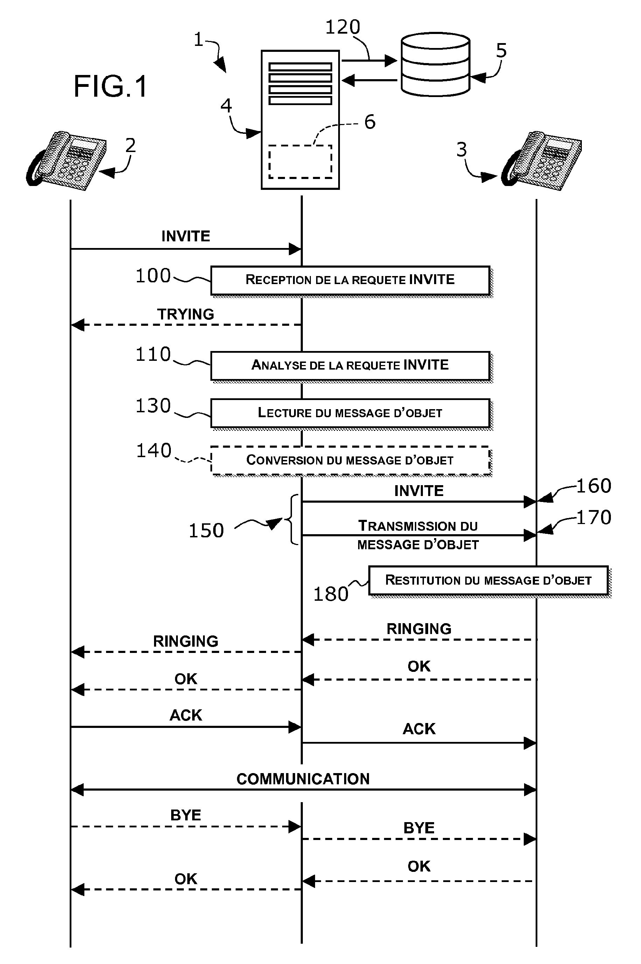

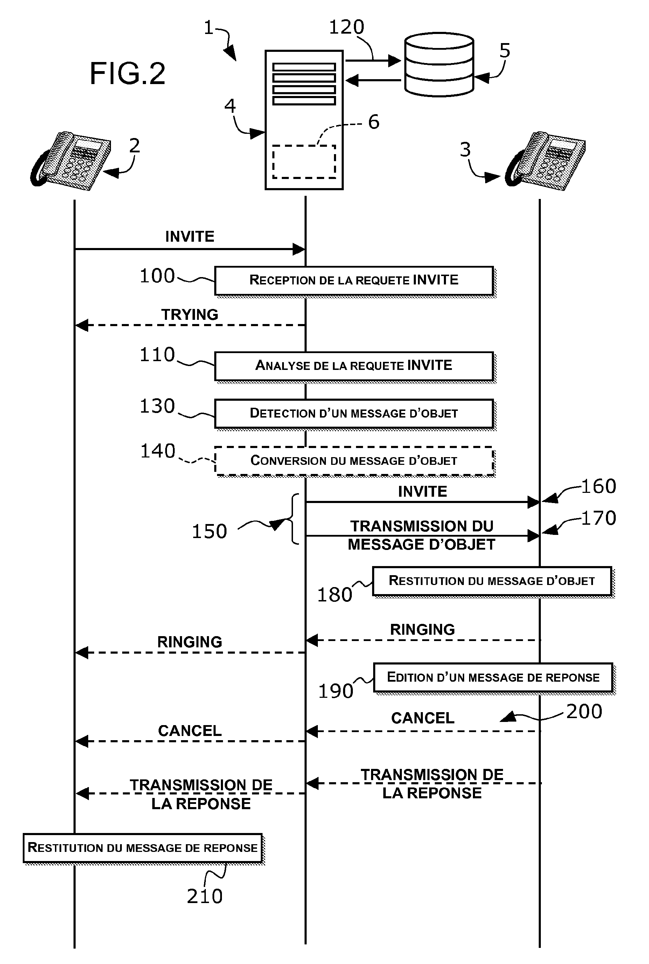

Sur les figures 1 et 2 est représenté un réseau **1** de télécommunication de type VolP, comprenant plusieurs équipements communicants, à savoir en l'occurrence deux terminaux **2, 3** sous forme de téléphones IP, et un serveur **4** mandataire (proxy).

Par hypothèse, le serveur proxy **4** et l'un des terminaux (par exemple le terminal **3)** font partie d'un même réseau local LAN (Local Area Network). Dans ce cas, le serveur proxy **4** est de préférence relié à une base de données **5** où sont stockées les associations entre les adresses URI *(Uniform Resource Identifier)* et IP *(Internet Protocol)* de l'ensemble des terminaux **3** du réseau LAN.

Tant le serveur **4** que les terminaux **2, 3** sont conçus pour émettre et recevoir des appels. Suivant un schéma classique, le serveur **4** sert de relais de télécommunication lors d'une communication à établir entre les deux terminaux **2, 3.** Au moins deux autres schémas sont envisageables. Suivant un premier schéma alternatif, le serveur 4 reçoit un appel en provenance d'un terminal émetteur (par exemple le terminal **2** extérieur au réseau LAN) sans le transférer vers un autre terminal : dans ce cas, on considère le serveur **4** comme récepteur de l'appel. Suivant un deuxième schéma alternatif, le serveur **4** émet, ou retransmet après l'avoir reçu et modifié, par exemple par adjonction d'informations, un appel vers un terminal récepteur (par exemple le terminal **3** interne au réseau LAN). Dans ce cas, on considère le serveur **4** comme émetteur de l'appel.

L'exemple décrit dans ce qui suit s'inscrit dans le cadre du schéma classique : on suppose que le terminal **2** (extérieur au réseau LAN) est l'équipement émetteur, tandis que le second terminal **3** est l'équipement récepteur.

Bien que l'invention ne soit pas limitée à cette technologie, le réseau **1** est ici configuré pour utiliser le protocole SIP lors de l'établissement et la terminaison des communications. A cet effet, les équipements (les terminaux **2**, **3** et le serveur 4) comprennent chacun une application logicielle, dénommée UA (User Agent) implémentée sur processeur et programmée pour générer des requêtes SIP. Les UA de l'équipement émetteur (en l'occurrence le terminal **2)** et de l'équipement récepteur (en l'occurrence le terminal **3)** sont respectivement dénommées UAC (User Agent Client) et UAS (User Agent Server).

Lorsque le terminal émetteur **2** émet un appel à destination du terminal récepteur **3,** l'UAC constitue une requête SIP de demande d'établissement de communication (INVITE) sous forme d'une succession de lignes de texte, à savoir :
- une première ligne, appelée ligne de début, comprenant un message textuel incluant le terme INVITE suivi de l'adresse URI du terminal appelé, et
- une ou plusieurs lignes dites d'en-tête dans chacune desquelles figure un message textuel comprenant un en-tête prédéfini suivi d'une valeur.

Les en-têtes comprennent au moins l'adresse URI du terminal appelant **2** *(From)* et l'objet *(Subject).* On fournit ci-après un exemple de requête SIP de ce type :
**INVITE** sip : terminal_récepteur@lan.com
**From**: terminal_émetteur@uac.com
**Subjec**t: Question urgente - 1 min

Comme on le voit, la requête de mise en communication inclut un message d'objet ayant trait à la raison de l'appel. Dans l'exemple présent, ce message est « Question urgente - 1 min ».

Le message d'objet contenant la raison de l'appel peut être soit saisi par l'utilisateur du terminal émetteur **2** au moyen d'un clavier alphanumérique, soit généré de manière automatique par conversion d'un message vocal en un message textuel au moyen d'une application de reconnaissance vocale *(speech to text),* soit encore choisi parmi une liste de messages préétablis mémorisés dans le terminal émetteur.

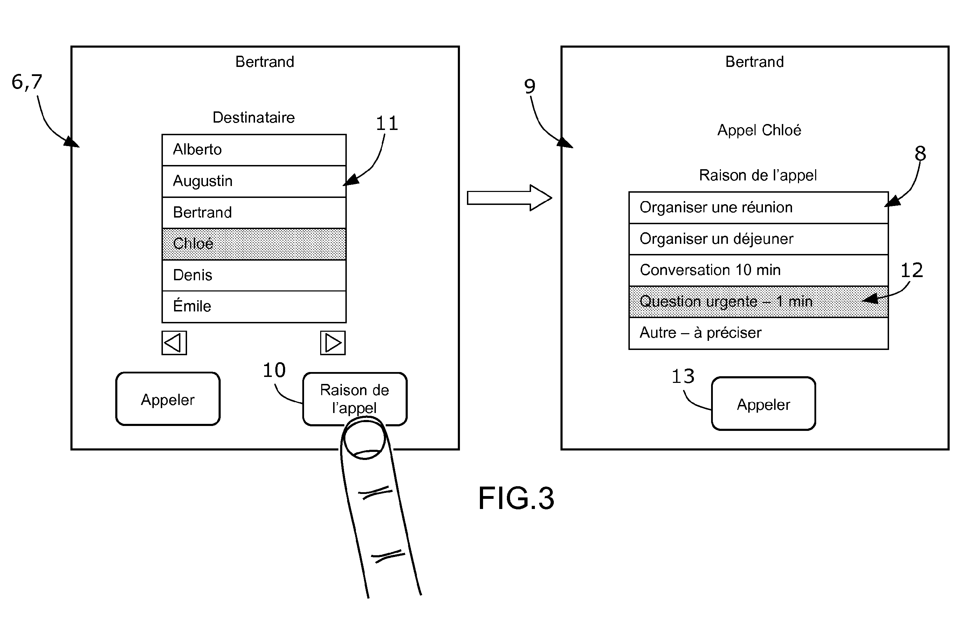

Ce dernier cas est illustré sur la figure 3, qui montre un exemple de choix, sur un écran primaire **6** affiché sur une interface graphique **7** du terminal émetteur **2,** du message d'objet parmi une liste présentée sous forme d'un menu déroulant **8** apparaissant sur un écran secondaire **9** de l'interface **7** par activation d'une touche **10** adéquate (ici intitulée « raison de l'appel »). La touche **10** peut être un bouton physique dans le terminal **2,** auquel cas son activation est effectué par impulsion, ou une zone délimitée dans l'écran primaire **6,** son activation pouvant alors être effectuée au moyen de boutons directionnels de sélection ou, si l'interface **6** est tactile (comme illustré sur la figure 3), par impulsion sur la zone définissant la touche **10.**

Dans l'exemple illustré, l'utilisateur du terminal émetteur (dénommé Bertrand) souhaite contacter Chloé pour une question urgente nécessitant une conversation téléphonique d'une durée d'une minute.

Bertrand sélectionne Chloé parmi un ensemble de destinataires présentés sur l'écran primaire **6** dans une liste sous forme d'un menu déroulant **11,** puis active la touche **10** « Raison de l'appel » afin d'accéder au menu **8** et sélectionner le message d'objet **12** adéquat : « Question urgente - 1 min ». Bertrand transmet ensuite l'appel, par exemple par impulsion sur une touche **13** intitulée « Appeler ». La requête de mise en communication est alors transmise à Chloé.

La requête transite par le serveur **4,** qui détecte la présence du message d'objet **12** et en lit le contenu, y agrège éventuellement des propositions de réponses (voir ci-dessous) avant de transférer la requête vers le terminal récepteur **3.**

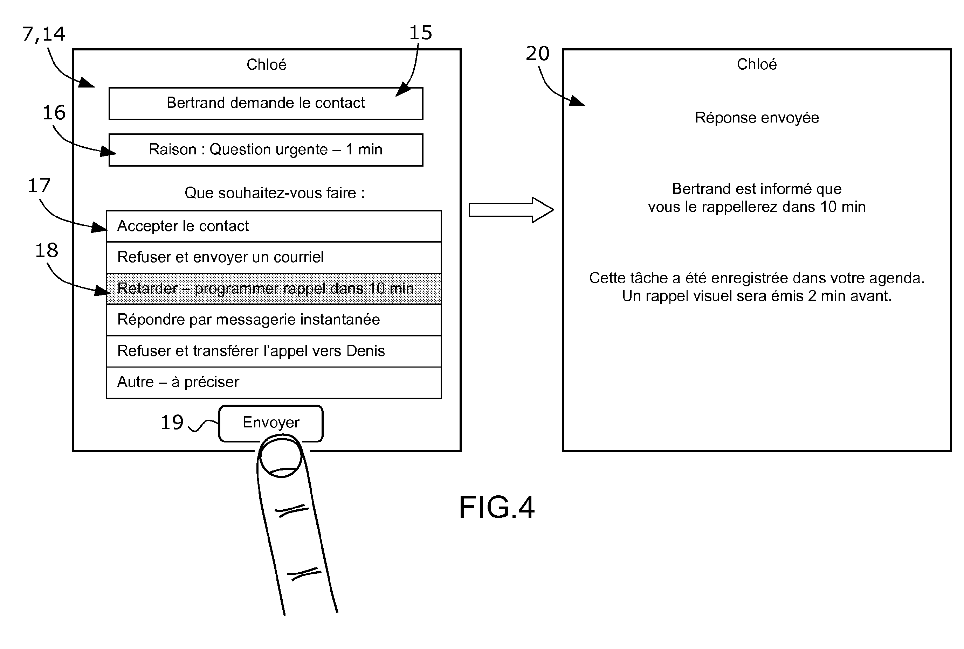

A réception de la requête de mise en communication en provenance du terminal émetteur **2,** le terminal récepteur **3** de l'utilisatrice Chloé affiche sur un écran primaire **14** de son interface **7** un message **15** informant Chloé qu'une requête de mise en communication a été reçue de Bertrand, comme cela est illustré sur la figure 4. L'interface **7** affiche également un message d'objet **16** rappelant le message d'objet **12** transmis par le terminal émetteur **2.**

Chloé peut alors choisir l'action qu'elle souhaite entreprendre en réponse à la requête de mise en communication, en la sélectionnant parmi une liste d'actions prédéfinies qui s'affichent sur le terminal **3** sous forme d'un menu déroulant **17.** Ces actions auront été mémorisées, par exemple, pour partie dans le terminal **3** lui-même, et pour partie dans le serveur **4** qui, en fonction d'informations dont il dispose en temps réel (notamment les possibilités de transfert en fonction des disponibilités des autres terminaux auxquels il est relié), est à même, dès réception de la requête de mise en communication, de proposer des actions supplémentaires à l'utilisateur du terminal **3,** actions qui viennent s'ajouter aux actions prédéfinies déjà mémorisées dans celui-ci.

Par exemple, l'action intitulée « Refuser et transférer l'appel vers Denis » est proposée par le serveur **4,** lequel est en effet informé de la disponibilité du terminal correspondant à l'utilisateur « Denis ». Le serveur transmet cette proposition d'action au terminal récepteur **3** simultanément à la requête de mise en communication.

Si l'on reprend l'exemple proposé ci-dessus (cas d'une requête SIP), le serveur **4** agrège donc à la requête une réponse (« answer »). La requête SIP transmise au terminal **3** peut donc présenter la syntaxe suivante :
**INVITE** sip : terminal_récepteur@lan.com
**From**: terminal_émetteur@uac.com
**Subject**: Question urgente - 1 min
**Answer** : Refuser et transférer l'appel vers Denis

Supposons par exemple que Chloé ne souhaite pas prendre l'appel mais retarder la communication en programmant un rappel 10 minutes plus tard. Elle sélectionne donc un message **18** intitulé « Retarder - programmer rappel dans 10 min » et active une touche **19** intitulée « Envoyer » (il s'agit par exemple, comme dans l'exemple illustré, d'une zone tactile dans l'interface **7** du terminal **3).**

L'activation de la touche **19** entraîne l'annulation de la requête de mise en communication et l'envoi au terminal émetteur **2,** par le terminal récepteur **3,** du message sélectionné. Un rappel automatique est programmé par le terminal **3,** avec rappel visuel préalable (en l'occurrence deux minutes avant le rappel automatique). Suivant un mode de réalisation illustré sur la figure 4, un résumé de chaque action entreprise est affiché sur un écran secondaire **20** sur l'interface **7** du terminal **3.**

On décrit à présent un procédé de signalisation permettant de réaliser les opérations présentées dans l'exemple qui précède, en référence aux figures 1 et 2.

Une première opération **100** est la réception, par le serveur **4,** de la requête INVITE de mise en communication constituée puis émise par le terminal émetteur **2,** à destination du terminal récepteur **3.**

Une seconde opération **110** est l'analyse de la requête INVITE par le serveur **4.** Une troisième opération **120** est l'interrogation de la base de données **5** pour l'identification du terminal récepteur **3.**

Une quatrième opération **130** est la détection et la lecture, par le serveur **4,** du message d'objet contenu dans la requête INVITE.

Une cinquième opération **140,** facultative, est la conversion du message d'objet de texte en message vocal *(text to speech)* dans l'hypothèse où le terminal récepteur **3** n'aurait pas de fonctionnalité d'affichage lui permettant de restituer le texte du message d'objet. A cet effet, la base de données **5** est instruite des fonctionnalités des terminaux reliés au serveur **4.**

Une sixième opération **150** est la transmission, par le serveur **4** au terminal récepteur **3,** de la requête INVITE avec le message d'objet.

Une septième opération **160** est la réception par le terminal récepteur **3** de la requête de mise en communication. Une huitième opération **170** est la prise en compte par le terminal récepteur **3** du message d'objet, puis une neuvième opération **180** étant la restitution par le terminal récepteur **3** du message d'objet, soit de manière textuelle sur une interface graphique, soit de manière vocale sur interface sonore (tel que haut-parleur), selon les fonctionnalités du terminal récepteur **3.**

Ayant pris connaissance du message d'objet, l'utilisateur du terminal récepteur **3** peut accepter la communication et donc répondre favorablement à la requête de mise en communication. Les opérations suivantes peuvent donc simplement comprendre le décrochement du terminal récepteur **3,** la mise en communication des terminaux **2** et **3,** puis, à la fin de la communication, la terminaison de celle-ci, comme illustré sur la figure 1.

En variante, et comme suggéré dans l'exemple décrit ci-dessus, l'utilisateur du terminal récepteur **3** peut (au moins dans l'immédiat) ne pas souhaiter entrer en communication avec l'utilisateur du terminal émetteur **2.**

A cet effet, une huitième opération **190** consiste en l'édition sur le terminal récepteur **3** d'un message de réponse, une neuvième opération **200** étant l'annulation de la requête de mise en communication et la transmission du message de réponse au terminal émetteur **2.** La dixième et dernière opération **210** consiste en la restitution, textuelle ou vocale (après conversion) du message de réponse sur l'interface du terminal émetteur **2,** comme cela est illustré sur la figure 2.

Il est à noter que, bien que l'exemple présenté ci-dessus se réfère à la téléphonie sur IP, l'invention peut s'appliquer à d'autres modes de communication et d'autre types d'équipements, tels que les PDA communicants, également dénommés « smartphones ».

Le procédé qui vient d'être décrit présente l'avantage de rendre les communications plus précises et plus efficaces, dans la mesure où celles-ci ne sont engagées que lorsque les deux parties (émettrice et réceptrice) sont prêtes à communiquer et connaissent toutes deux l'objet de la communication.

La connaissance de la raison de l'appel permet à la partie réceptrice de mieux gérer ses appels en acceptant certaines communications jugées par exemple importantes ou urgentes, tandis que d'autres sont refusées ou reportées.

## Revendications

1. Procédé de signalisation sur un équipement récepteur **(3)** d'un appel en provenance d'un équipement émetteur **(2),** ce procédé comprenant les opérations suivantes :
- constitution d'une requête de mise en communication par l'équipement émetteur **(2)** à destination de l'équipement récepteur **(3);**
- inclusion au sein de la requête d'un message d'objet ayant trait à la raison de l'appel ;
- transmission à l'équipement récepteur **(3)** de la requête de mise en communication, comprenant le message d'objet ;
- réception par l'équipement récepteur **(3)** de la requête de mise en communication ;
- restitution du message d'objet par l'équipement récepteur **(3) ;**
et étant **caractérisé en ce qu'**il consiste en outre à agréger **(150)** à ladite requête au moins une proposition de réponse, avant de la transmettre à l'équipement récepteur **(3).**

2. Procédé de signalisation selon la revendication 1, **caractérisé en ce que**, pour agréger **(150)** à ladite requête au moins une proposition de réponse, avant de la transmettre à l'équipement récepteur **(3),** il consiste, à déterminer au moins une proposition de réponse dans un serveur intermédiaire **(4)** en fonction d'informations dont il dispose en temps réel.

3. Procédé de signalisation selon la revendication 2, dans lequel la restitution du message d'objet par l'équipement récepteur **(3)** est effectuée par affichage sur une interface graphique **(7).**

4. Procédé de signalisation selon la revendication 2, dans lequel la restitution du message d'objet par l'équipement récepteur **(3)** est effectuée par lecture sur une interface sonore.

5. Procédé de signalisation selon la revendication 4, qui comprend, préalablement à la transmission de la requête de mise en communication à l'équipement récepteur **(3),** une opération de conversion du message d'objet en un message restituable sur l'interface sonore de l'équipement récepteur **(3).**

6. Procédé de signalisation selon la revendication 1, qui comprend les opérations supplémentaires suivantes ;
- Edition **(190)** par l'équipement récepteur **(3, 4)** d'un message de réponse au message d'objet, ce message de réponse étant sélectionné parmi au moins une proposition de réponse agrégée à ladite requête ;
- transmission **(200)** par l'équipement récepteur **(3)** du message de réponse à destination de l'équipement émetteur **(2).**

7. Procédé de signalisation selon la revendication 6, dans lequel le message de réponse est choisi parmi un ensemble de messages préétablis mis en mémoire.

8. Procédé de signalisation selon la revendication 1, dans lequel la requête en provenance de l'équipement émetteur **(2)** est une requête SIP.

9. Serveur de télécommunication, **caractérisé en ce qu'**il comporte des moyens pour la mise en oeuvre du procédé selon l'une des revendications 1 à 8.
